# DEMANDE DE BREVET EUROPEEN

(11) **EP 3 547 602 A1**
(43) Date de publication de la demande: **02.10.2019**
(21) Numéro de dépôt: 19165673.5
(22) Date de dépôt: 28.03.2019
(51) Int. Cl.: H04L 9/08, G06F 21/14

(54) **PROCÉDÉ DE MISE EN OEUVRE D'UNE FONCTION CRYPTOGRAPHIQUE POUR UNE CLÉ SECRÈTE**

(30) Priorité: 29.03.2018 FR 1852738
(71) Demandeur: Idemia Identity & Security France, 92400 Courbevoie (FR)
(72) Inventeur: PORTERET, Cyril, 92400 COURBEVOIE (FR); SOUMAH, Christophe, 92400 COURBEVOIE (FR)
(74) Mandataire: Regimbeau

(57) **Abrégé**

La présente invention concerne un procédé de mise en oeuvre d'une fonction cryptographique pour une clé secrète, le procédé étant caractérisé en ce qu'il comprend la mise en oeuvre, par des moyens de traitement de données (11) d'un équipement (1), d'étapes de :
(b) Construction d'une séquence unique de macro-instructions cryptographiques, représentant ladite fonction cryptographique pour ladite clé secrète, en fonction de :
- une liste générique de macro-instructions cryptographiques exécutables par une machine virtuelle donnée ; et
- un fichier individuel de données descriptives de ladite séquence ;

(c) Exécution, par ladite machine virtuelle, de ladite séquence unique de macro-instructions cryptographiques.

## Description

### DOMAINE TECHNIQUE GENERAL

La présente invention concerne le domaine de la cryptographie, et en particulier un procédé cryptographique de type « boite blanche ».

### ETAT DE L'ART

Une fonction est considérée comme une « boîte noire » lorsqu'on ne peut pas accéder à son fonctionnement interne, i.e. qu'on peut connaître ses entrées et ses sorties mais pas ses paramètres secrets (clés) ou ses états intermédiaires.

Les algorithmes cryptographiques (par exemple pour du chiffrement ou de la signature) sont ainsi classiquement supposés des boites noires lorsqu'on évalue leur fiabilité (résistance aux attaques).

Cette hypothèse impose une contrainte forte sur le stockage et la manipulation de ces paramètres. Cependant des outils ont été récemment publiés pour permettre l'automatisation d'attaques sur implémentation matérielle, attaques dites par canaux auxiliaires ou par fautes.

Aujourd'hui, pour de nombreux cas d'usages incluant le paiement sur mobile, il est nécessaire de déployer des algorithmes cryptographiques en faisant le moins d'hypothèses possibles sur la sécurité du matériel cible. Le stockage et la manipulation sécurisés des paramètres secrets doivent alors être assurés au niveau applicatif.

La cryptographie dite boite blanche vise à répondre à ce défi en proposant des implémentations des algorithmes cryptographiques qui sont sensés rendre l'extraction des secrets impossible, même en cas d'attaque permettant à l'attaquant un accès complet à l'implémentation logicielle de l'algorithme. Plus précisément, une fonction est considérée comme une « boîte blanche » lorsque ses mécanismes sont visibles et permettent d'en comprendre le fonctionnement. En d'autres termes, on fait directement l'hypothèse que l'attaquant a accès à tout ce qu'il souhaite (le binaire est complètement visible et modifiable par l'attaquant et celui-ci a le plein contrôle de la plateforme d'exécution). Par conséquent, l'implémentation elle-même est la seule ligne de défense.

Pour protéger l'implémentation d'un algorithme cryptographique, une solution est ainsi de fusionner les clés avec la fonction les utilisant en représentant les calculs par des tables. Cela évite d'avoir les clés en clair, on dit qu'elles sont « whiteboxées ».

Toutefois, cette solution s'avère incompatible avec certains systèmes d'exploitation (OS), en particulier mobiles, qui ne permettent le chargement de code que depuis des plateformes d'applications officielles appelées « store » (par exemple l'App Store pour iOS), après validation du code, et n'autorisent pas le chargement ou la modification ultérieure de code par des utilisateurs intermédiaires (par exemple un fournisseur d'un logiciel de sécurité) ou finaux (le possesseur du téléphone).

En effet, le fait de whiteboxer une clé implique que le code implémentant l'algorithme soit différent pour chaque clé, i.e. pour chaque utilisateur.

Il faudrait alors que la plateforme d'applications de l'OS autorise individuellement chaque version individuelle de l'application, ce qui n'est pas possible.

Alternativement, il faudrait que la plateforme d'application autorise le chargement via la plateforme officielle d'une version commune de l'application, dans laquelle un organisme certifié viendrait insérer un bloc de code individuel, mais il est peu probable que les fournisseurs d'OS acceptent une telle « brèche » dans le processus actuel qui prévoit que toute ligne de code proposée au chargement soit préalablement soumise à validation et autorisation par le fournisseur d'OS.

Il serait par conséquent souhaitable de disposer d'une nouvelle solution « boite blanche » qui reste compatible avec les processus de mise à disposition d'applications sur des plateformes officielles d'OS, en particulier mobile.

### PRESENTATION DE L'INVENTION

Selon un premier aspect, la présente invention concerne un procédé de mise en oeuvre d'une fonction cryptographique pour une clé secrète, le procédé étant caractérisé en ce qu'il comprend la mise en oeuvre, par des moyens de traitement de données d'un équipement, d'étapes de :
(b) Construction d'une séquence unique de macro-instructions cryptographiques, représentant ladite fonction cryptographique pour ladite clé secrète, en fonction de :
   - une liste générique de macro-instructions cryptographiques exécutables par une machine virtuelle donnée ; et
   - un fichier individuel de données descriptives de ladite séquence ;
(c) Exécution, par ladite machine virtuelle, de ladite séquence unique de macro-instructions cryptographiques.

Selon d'autres caractéristiques avantageuses et non limitatives :
- ledit fichier individuel définit ladite séquence unique de macro-instructions cryptographiques comme une séquence d'éléments de ladite liste générique de macro-instructions cryptographiques ;
- lesdites données descriptives de ladite séquence identifient successivement chacune des macro-instructions de ladite séquence dans ladite liste générique de macro-instructions cryptographiques ;
- le fichier individuel est associé de manière unique à la clé secrète ;
- une étape (a) préalable d'obtention d'une application générique apte à mettre en oeuvre ladite machine virtuelle et comportant ladite liste générique de macro-instructions cryptographiques exécutables par la machine virtuelle, et dudit fichier individuel ;
- l'obtention dudit fichier individuel comprend le chargement ultérieur du fichier par ladite application ;
- l'application générique est chargée par l'équipement depuis un premier serveur de plateforme d'application, et le fichier individuel est chargé par l'application depuis un deuxième serveur détenant la clé sécrète ;
- le chargement du fichier individuel comprend préalablement l'envoi d'une requête au deuxième serveur, la génération par le deuxième serveur du fichier individuel à partir de la clé secrète, et la réception du fichier individuel par l'équipement.

Selon un deuxième aspect, est proposé un équipement caractérisé en ce qu'il comprend des moyens de traitement de données configurés pour :
- Construire une séquence unique de macro-instructions cryptographiques, représentant une fonction cryptographique pour une clé secrète d'un utilisateur de l'équipement, en fonction de :
   ∘ une liste générique de macro-instructions cryptographiques exécutables par une machine virtuelle donnée ; et
   ∘ un fichier individuel de données descriptives de ladite séquence ;
- Exécuter, par ladite machine virtuelle, ladite séquence unique de macro-instructions cryptographiques, de sorte à mettre en oeuvre ladite fonction cryptographique pour la clé secrète de l'utilisateur.

Selon un troisième et un quatrième aspect, l'invention propose un produit programme d'ordinateur comprenant des instructions de code pour l'exécution d'un procédé selon le premier aspect de mise en oeuvre d'une fonction cryptographique pour une clé secrète ; et un moyen de stockage lisible par un équipement informatique sur lequel un produit programme d'ordinateur comprend des instructions de code pour l'exécution d'un procédé selon le premier aspect de mise en oeuvre d'une fonction cryptographique pour une clé secrète.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en oeuvre du procédé selon l'invention ;
- la figure 2 illustre un exemple de mise en oeuvre de l'étape (a) d'un mode de réalisation du procédé selon l'invention.

### DESCRIPTION DETAILLEE

### Architecture

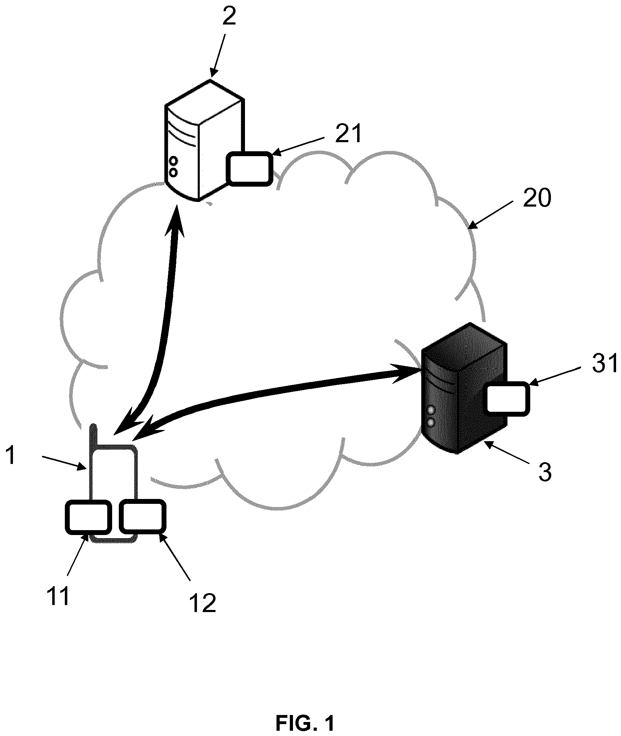

En référence à la **figure 1**, est proposé un procédé de mise en oeuvre d'une fonction cryptographique « boite blanche » mis en oeuvre au sein d'un équipement 1 tel qu'un terminal mobile (smartphone, tablette tactile, etc.), i.e. un équipement ne disposant pas particulièrement d'un matériel sécurisé et qui peut faire l'objet d'attaques sur implémentation matérielle, et pour lequel l'approche boite blanche prend tout son intérêt.

L'équipement 1 comprend des moyens de traitement de données 11 (une unité de traitement telle qu'un processeur) et des moyens de stockage de données 12 (une mémoire, par exemple flash).

L'équipement 1 peut être relié à un premier serveur 2 et/ou un deuxième server 3 par exemple via le réseau internet 2. Chaque server 2, 3 peut comprendre des moyens de traitement de données 21, 31. Le premier serveur peut être celui d'une plateforme d'applications, en particulier la plateforme officielle d'applications associée au système d'exploitation de l'équipement 1 (par exemple celle de l'App Store si l'équipement 1 est un terminal mobile sous iOS), et le deuxième serveur peut être celui d'un fournisseur de solutions de sécurité.

Comme l'on verra, dans un mode de réalisation préféré l'équipement 1 être amené à obtenir, pour la mise en oeuvre du présent procédé, une application depuis le premier serveur 2 et un fichier de données depuis le deuxième serveur 3.

L'équipement 1 peut lui-même être connecté à d'autres serveurs de tiers avec lesquels il pourra échanger par exemple des messages obtenus au moyen du présent procédé.

### Fonction cryptographique

Le présent procédé est un procédé de mise en oeuvre d'une fonction cryptographique pour une clé secrète individuelle (ou une combinaison individuelle de clés secrètes), en particulier la clé de l'utilisateur de l'équipement 1. A noter que le deuxième serveur 3 peut détenir la clé secrète (et de façon générale les clés d'une pluralité d'utilisateurs).

La fonction cryptographique peut être de « chiffrement ou de déchiffrement », cela signifie qu'elle permet selon les cas de chiffrer des données ou d'en déchiffrer. Alternativement, la fonction cryptographique peut être de signature, c'est-à-dire qu'elle permet à l'utilisateur de signer de façon irrévocable un document.

L'homme du métier saura appliquer le présent procédé à toute fonction cryptographique symétrique ou asymétrique qui implique un secret qui ne doit pas être connu hors de l'équipement 1.

On comprendra que le présent procédé est une nouvelle implémentation d'algorithmes connus. Plus précisément, il ne propose pas une nouvelle stratégie cryptographique, mais seulement une nouvelle façon de manipuler les données au sein de l'algorithme qui soit résistante à toutes les attaques matérielles en « boite blanche ». Ainsi la clé secrète de l'utilisateur est « obfusquée » dans la fonction cryptographique, c'est-à-dire fusionnée avec cette dernière au lieu d'être un paramètre d'entrée (la fonction cryptographique est ainsi individualisée) de sorte qu'un tiers ayant accès à la mémoire 12 de l'équipement 1 ne pourra lire la clé en clair.

Pour reformuler, on comprendra que le terme « obfuscation » s'entend ici au sens de la cryptographie boite blanche, c'est-à-dire spécifiquement l'enfouissement de clés secrètes de sorte à empêcher leur extraction par un tiers qui aurait accès à l'environnement, et ne doit pas être confondu avec l'obfuscation de code qui est le fait de rendre « illisible ou incompréhensible » du code informatique pour prévenir de façon générale le reverse engineering, indépendamment de toute problématique cryptographique.

Ainsi on vise présentement à l'implémentation blanchie de ladite fonction cryptographique pour la clé secrète, i.e. l'implémentation obfusquant la clé secrète.

Le présent procédé est mis en oeuvre par les moyens de traitement de données 11 de l'équipement 1. Il réussit l'exploit d'individualiser la fonction cryptographique tout en permettant de continuer à utiliser les plateformes officielles d'applications.

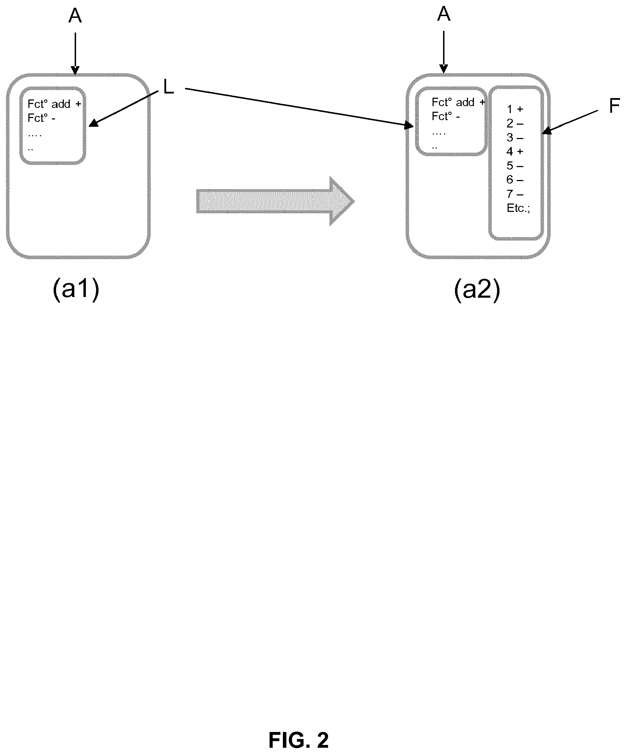

En référence à la **figure 2**, le présent procédé combine pour cela deux éléments :
- une liste générique (notée L) de macro-instructions cryptographiques exécutables par une machine virtuelle donnée, en particulier contenue par une application (notée A) également générique ; et
- un fichier individuel (noté F) de données.

Par « générique », on entend commun à tous les utilisateurs, par opposition au fichier individuel qui est spécifique à l'utilisateur.

Comme l'on va voir, la combinaison de ces deux éléments grâce à une machine virtuelle permet la construction d'une séquence unique de macro-instructions cryptographiques, représentant ladite fonction cryptographique pour ladite clé secrète, i.e. la fonction individualisée. En d'autres termes, la séquence unique de macro-instructions cryptographiques constitue une implémentation blanchie de ladite fonction cryptographique pour ladite clé secrète, i.e. obfusque la clé secrète.

Dans une étape optionnelle (a), les deux éléments sont obtenus par l'équipement 1. En référence à la figure 2, on note (a1) l'obtention de la liste générique, et (a2) l'obtention du fichier individuel.

On comprendra que cette étape (a) n'a besoin que d'être mise en oeuvre une fois, et ensuite le reste du procédé peut être mis en oeuvre à chaque fois que l'on souhaite la mise en oeuvre de la fonction cryptographique.

Comme expliqué, la liste est préférentiellement contenue dans une application générique apte à mettre en oeuvre la machine virtuelle (i.e. contenant le code nécessaire à l'exécution de la machine virtuelle sur les moyens de traitement 11 de l'équipement 1). Cette application est commune à tous les utilisateurs et peut être donc proposée à la plateforme d'applications (elle peut subir un processus de certification) de sorte à être téléchargeable de façon générique (i.e. par tous les utilisateurs quelle que soit leur clé secrète) depuis le serveur 2 mettant en oeuvre la plateforme.

La machine virtuelle permet « d'encapsuler » les macro-instructions cryptographiques. Plus précisément, celles-ci sont rédigées en un langage exécutable par la machine virtuelle mais pas exécutable par les moyens de traitement de données 11 de l'équipement (i.e. pas un langage reconnu par l'OS). La virtualisation permet donc l'exécution de code varié isolément de l'OS, c'est ce que l'on appelle le « sandboxing ». Ce langage exécutable par la machine virtuelle est préférentiellement un bytecode bas niveau qui inclus code et données pour réaliser chaque macro-instruction.

La machine virtuelle est quant à elle avantageusement la plus simple possible pour améliorer les performances, et en particulier une machine virtuelle algorithmique pure.

Cela signifie qu'elle ne permet aucune fonctionnalité externe, ne présente pas d'entrée-sortie, pas de pilote, pas d'accès réseau, pas d'accès fichier, et absolument aucune interaction avec le système d'exploitation. Il est cependant naturellement possible que la machine virtuelle ait un accès à la mémoire vive (RAM) pour pouvoir fonctionner, mais pas à tout autre système de stockage. A ce titre, une zone mémoire peut être réservée et bloquée (de façon « hermétique ») au sein de la mémoire utilisée par l'application.

Il est en effet important de comprendre qu'une VM qui « contournerait » l'interdiction de chargement de code non vérifié en pouvant contrôler les fonctionnalités du terminal serait retoquée et interdite de mise à disposition sur la plateforme officielle d'applications associée au système d'exploitation de l'équipement 1.

Par macro-instructions cryptographiques, on entend des fonctions cryptographiques « élémentaires » servant de briques pour exprimer la fonction cryptographique « complexe » objet du présent procédé. Il peut s'agir des fonctions arithmétiques de base, « look up », calcul dans tables, shift dans un sens ou dans l'autre, détection d'erreur, etc. i.e. les fonctions typiques des algorithmes du type triple DES ou AES.

Ainsi, comme l'on va voir, la fonction cryptographique individualisée (pour la clé secrète) va être exprimée comme une séquence unique de macro-instructions cryptographiques de ladite liste. Différentes séquences permettront de représenter différentes versions de la fonction cryptographique, i.e. diverses valeurs de la clé.

La « liste » de macro-instructions cryptographiques contient le code informatique de chaque macro-instruction possible, dans le langage de la machine virtuelle. On peut voir cette liste comme une sorte d'ontologie décrivant une collection exhaustive de toutes les macro-instructions utilisables. Les macro-instructions peuvent être identifiées de manière unique dans la liste par un nom ou un numéro.

Dans la mesure où la liste contient du code, elle ne peut pas être obtenue autrement que via la plateforme d'applications du serveur 2 si le fournisseur d'OS impose des restrictions. Cependant, comme elle est générique cela ne pose aucun problème.

Ainsi, un tiers ayant connaissance de la liste seule ne peut rien en faire car elle ne fait que déclarer les macro-instructions et ne précise pas comment les utiliser. L'idée est que grâce à la liste, la totalité du code devant être exécuté pour mettre en oeuvre est présent dès l'origine dans l'application, bien que la façon dont ce code doit être exécuté soit encore inconnue. Il n'y a ainsi nul besoin de chargement de code a posteriori, et on ne contrevient ainsi pas aux restrictions de l'OS en matière de passage par la plateforme officielle.

Le « fichier individuel » est quant à lui un fichier de données descriptives de la séquence unique qui représente la fonction cryptographique individualisée par la clé. Ainsi, ce n'est qu'un fichier de données, il ne comprend pas de code, et de fait échappe à la nécessité d'être obtenu depuis la plateforme d'applications du serveur 2, et peut être récupéré a posteriori, depuis le serveur 3 (comme expliqué, typiquement un serveur d'un fournisseur de solutions de sécurité).

Le fichier individuel est associé à la clé individuelle (et même fonction de cette clé individuelle), dans la mesure où un fichier permet de manière unique d'obtenir la version de la fonction cryptographique pour une clé. Plus précisément, le fichier individuel est choisi tel que pour une clé donnée, une fonction cryptographique donnée et une liste générique de macro-instructions cryptographiques donnée, ladite séquence unique de macro-instructions cryptographiques construite pour ce fichier individuel représente exactement la fonction cryptographique pour cette clé sécrète. Une clé secrète différente entraînera donc un fichier individuel différent, et ainsi le fichier individuel « représente » la clé secrète sans la contenir et donc sans qu'elle soit accessible, d'où l'obfuscation.

On comprend donc que chaque utilisateur a un fichier individuel généré à partir de sa clé individuelle (qu'on suppose donnée), de sorte que le fichier individuel est entièrement défini et n'est pas un objet choisi (volontairement ou arbitrairement).

Par « données descriptives de ladite séquence », on entend que ledit fichier individuel définit ladite séquence unique de macro-instructions cryptographiques comme une séquence d'éléments de ladite liste générique de macro-instructions cryptographiques.

Avantageusement, lesdites données descriptives de ladite séquence sont des instructions identifiant successivement chacune des macro-instructions de ladite séquence dans ladite liste générique de macro-instructions cryptographiques.

On peut voir le fichier individuel comme un « interpréteur » des micro-instructions cryptographiques en ce qu'il permet d'exécuter la liste générique.

Pour reformuler encore, le fichier définit seulement le choix et l'ordre des macro-instructions de la liste qui composent la séquence. On répète que le fichier ne contient pas de code (et a fortiori pas le code précis des macro-instructions) et donc ne fait qu'identifier les macro-instructions, par exemple via leur nom ou leur numéro dans la liste. Ainsi, un tiers mal intentionné interceptant le fichier ne pourra rien en faire. Et quand bien même il disposait de la liste et du fichier d'un utilisateur (par exemple s'il lui vole son équipement 1), il pourrait au mieux mettre en oeuvre la fonction cryptographique, mais pas retrouver la clé secrète obfusquée dans la séquence unique.

Dans l'exemple de la figure 2, on a deux macro-instructions notées « + » et « - » définies dans la liste L, et le fichier F décrit la séquence suivante « +, -, -, +, - , -, - ».

En d'autres termes, la séquence unique exécutable représentant la fonction cryptographique individualisée est la suivante : une fois le code de la fonction +, deux fois le code de la fonction -, une fois le code de la fonction +, trois fois le code de la fonction -.

De façon préférée, l'étape (a) d'initialisation se déroule de la sorte :
- dans la sous-étape (a1), l'utilisateur charge (dans la mémoire 12) depuis la plateforme d'application du serveur 2 l'application générique apte à mettre en oeuvre ladite machine virtuelle et comportant ladite liste générique de macro-instructions cryptographiques exécutables par la machine virtuelle, l'application est alors installée sur l'équipement 1. A noter que l'utilisateur peut pour cela passer par une application dédiée de l'OS pour l'accès à ladite plateforme d'application, telle que l'application « App Store » d'iOS qui permet d'accéder à la plateforme du même nom pour lancer un téléchargement d'application.
- Dans la sous-étape (a2), l'application est « personnalisée » grâce au chargement (dans la mémoire 12) du fichier individuel correspondant à sa clé personnelle, depuis le serveur 3. On note qu'on ne passe plus par la plateforme d'applications officielle. Ce chargement peut être par exemple initié au premier lancement de l'application encore générique. De façon préférée, l'étape (a2) comprend alors l'envoi préalable d'une requête au deuxième serveur 3, la génération par le deuxième serveur 3 (en utilisant ses moyens de traitement de données 31) du fichier individuel à partir de la clé secrète, et la réception du fichier individuel par l'équipement. A ce titre, le serveur 3 peut réclamer la transmission depuis l'équipement 1 de données prouvant l'identité de l'utilisateur, par exemple une photo récente avec un appareil photo de l'équipement et un document d'identité scanné, avant d'accepter de traiter la requête.

L'application personnalisée contient alors bien la clé obfusquée, et elle est opérationnelle pour mettre en oeuvre la fonction cryptographique.

Dans une étape (b) en fonctionnement classique, comme expliqué les moyens de traitement de données 11 construisent la séquence unique de macro-instructions cryptographiques représentant ladite fonction cryptographique pour ladite clé secrète, en fonction de :
- la liste générique de macro-instructions cryptographiques exécutables par une machine virtuelle donnée ; et
- le fichier individuel de données descriptives de ladite séquence.

Enfin, le procédé comprend une étape (c) d'exécution, par ladite machine virtuelle, de ladite séquence unique de macro-instructions cryptographiques, de sorte à mettre en oeuvre la fonction cryptographique pour la clé secrète de l'utilisateur.

### Produit programme d'ordinateur

Selon un deuxième aspect, l'invention concerne un équipement 1 pour la mise en oeuvre du procédé selon le premier aspect, en particulier de type terminal mobile.

L'équipement 1 comprend ainsi des moyens de traitement de données 11 configurés pour :
- Construire une séquence unique de macro-instructions cryptographiques, représentant une fonction cryptographique pour une clé secrète d'un utilisateur de l'équipement 1, en fonction de :
   ∘ une liste générique de macro-instructions cryptographiques exécutables par une machine virtuelle donnée ; et
   ∘ un fichier individuel de données descriptives de ladite séquence ;
- Exécuter, par ladite machine virtuelle, ladite séquence unique de macro-instructions cryptographiques, de sorte à mettre en oeuvre ladite fonction cryptographique pour la clé secrète de l'utilisateur.

### Produit programme d'ordinateur

Selon un troisième aspect et un quatrième aspects, l'invention concerne un produit programme d'ordinateur comprenant des instructions de code pour l'exécution (en particulier sur les moyens de traitement de données 11 de l'équipement 1) d'un procédé selon le premier aspect de l'invention de mise en oeuvre d'une fonction cryptographique pour une clé secrète, ainsi que des moyens de stockage lisibles par un équipement informatique (une mémoire 12 de l'équipement 1) sur lequel on trouve ce produit programme d'ordinateur.

## Revendications

1. Procédé de mise en oeuvre d'une fonction cryptographique pour une clé secrète, le procédé étant **caractérisé en ce qu'**il comprend la mise en oeuvre, par des moyens de traitement de données (11) d'un équipement (1), d'étapes de :
(b) Construction d'une séquence unique de macro-instructions cryptographiques, représentant ladite fonction cryptographique pour ladite clé secrète, en fonction de :
- une liste générique de macro-instructions cryptographiques exécutables par une machine virtuelle donnée ; et
- un fichier individuel de données descriptives de ladite séquence ;
(c) Exécution, par ladite machine virtuelle, de ladite séquence unique de macro-instructions cryptographiques.

2. Procédé selon la revendication 1, dans lequel ledit fichier individuel définit ladite séquence unique de macro-instructions cryptographiques comme une séquence d'éléments de ladite liste générique de macro-instructions cryptographiques.

3. Procédé selon la revendication 2, dans lequel lesdites données descriptives de ladite séquence identifient successivement chacune des macro-instructions de ladite séquence dans ladite liste générique de macro-instructions cryptographiques.

4. Procédé selon l'une des revendications 1 à 3, dans lequel le fichier individuel est associé de manière unique à la clé secrète.

5. Procédé selon la revendication 4, dans lequel le fichier individuel est fonction de la clé secrète.

6. Procédé selon l'une des revendications 1 à 5, comprenant une étape (a) préalable d'obtention d'une application générique apte à mettre en oeuvre ladite machine virtuelle et comportant ladite liste générique de macro-instructions cryptographiques exécutables par la machine virtuelle, et dudit fichier individuel.

7. Procédé selon la revendication 6, dans lequel l'obtention dudit fichier individuel comprend le chargement ultérieur du fichier par ladite application.

8. Procédé selon la revendication 7, dans lequel l'application générique est chargée par l'équipement (1) depuis un premier serveur (2) de plateforme d'application, et le fichier individuel est chargé par l'application depuis un deuxième serveur (3) détenant la clé sécrète.

9. Procédé selon les revendications 5 et 8 en combinaison, dans lequel le chargement du fichier individuel comprend préalablement l'envoi d'une requête au deuxième serveur (3), la génération par le deuxième serveur (3) du fichier individuel à partir de la clé secrète, et la réception du fichier individuel par l'équipement (1).

10. Equipement (1) **caractérisé en ce qu'**il comprend des moyens de traitement de données (11) configurés pour :
- Construire une séquence unique de macro-instructions cryptographiques, représentant une fonction cryptographique pour une clé secrète d'un utilisateur de l'équipement (1), en fonction de :
∘ une liste générique de macro-instructions cryptographiques exécutables par une machine virtuelle donnée ; et
∘ un fichier individuel de données descriptives de ladite séquence ;
- Exécuter, par ladite machine virtuelle, ladite séquence unique de macro-instructions cryptographiques, de sorte à mettre en oeuvre ladite fonction cryptographique pour la clé individuelle de l'utilisateur.

11. Produit programme d'ordinateur comprenant des instructions de code pour l'exécution d'un procédé selon l'une des revendications 1 à 9 de mise en oeuvre d'une fonction cryptographique pour une clé secrète, lorsque ledit programme est exécuté par un ordinateur.

12. Moyen de stockage lisible par un équipement informatique sur lequel un produit programme d'ordinateur comprend des instructions de code pour l'exécution d'un procédé selon l'une des revendications 1 à 9 de mise en oeuvre d'une fonction cryptographique pour une clé secrète.
